# EUROPEAN PATENT SPECIFICATION

(11) **EP 1 294 807 B1**
(45) Date of publication and mention of the grant of the patent: **16.11.2005**
(21) Application number: 01944787.9
(22) Date of filing: 01.06.2001
(51) Int. Cl.: C08L 63/10, C08K 3/22, C08K 5/07, C08K 5/10, D06M 15/00

(54) **THICKENABLE VINYL ESTER RESIN COMPOSITIONS**
VERDICKBARE VINYLESTERHARZ ZUSAMMENSETZUNG
COMPOSITIONS A BASE DE RESINE D'ESTER VINYLIQUE POUVANT EPAISSIR

(30) Priority: 14.06.2000 CA 2311661
(43) Date of publication of application: 26.03.2003
(73) Proprietor: Simex Technologies Inc, Saint-Laurent, Québec H4S 1E7 (CA)
(72) Inventor: CHTOUROU, Halim, Pointe Claire, Québec H9R 5R7 (CA)
(74) Representative: Casalonga, Axel
(86) International application number: PCT/CA2001/000814
(87) International publication number: WO 2001/096473

(56) References cited:
- EP-A- 0 518 122
- DE-A- 4 406 646
- US-A- 3 649 546

## Description

### TECHNICAL FIELD

The present invention pertains to improvements in the field of thermosetting polymer compositions. More particularly, the invention relates to a curable vinyl ester resin composition which is capable of undergoing B-staging at room temperature and which is suitable for impregnating a fibrous material.

### BACKGROUND ART

In the conventional production of a resin pre-impregnated fibrous material, the fibrous material is impregnated with a curable resin dissolved in a solvent and the resin is partially cured to a B-stage by the application of heat followed by a solvent recuperation. A B-stage is a temporary phase which occurs after the resin has undergone an increase in viscosity without solidification and during which the increased viscosity remains stable. The pre-impregnated fibrous material is then stored or shipped to an end-user who completes the cure with heat and pressure in a molding operation. Such a process is costly since it requires the application of heat during the partial curing and a subsequent solvent recuperation.

It is known that a Group II metal oxide or hydroxide, such as magnesium oxide, is capable B-staging thermosetting vinyl ester resins at room temperature only if the resins have been chemically modified to contain free carboxylic acid groups, such as described in US Patent No. 3,548,030, or modified to contain an increased proportion of ester groups, such as described in US Patent No. 4,197,390. The processes described in these two patents are also costly since they require the preparation of a special vinyl ester resin.

### DISCLOSURE OF THE INVENTION

It is therefore an object of the present invention to overcome the above drawbacks and to provide a curable vinyl ester resin composition wherein the vinyl ester resin is a conventional unmodified resin which can nevertheless undergo B-staging at room temperature.

In accordance with the present invention, there is thus provided a curable vinyl ester resin composition capable of undergoing B-staging at room temperature, comprising:
a) an unmodified vinyl ester resin having no free carboxyl groups;
b) a reactive diluent consisting of an ethylenically unsaturated monomer,
c) a free-radical curing agent;
d) a B-staging agent comprising a Group II metal oxide or hydroxide, or a mixture thereof; and
e) a thickening agent comprising an ester, a ketone, an aldehyde or a mixture thereof as defined in claim 1;
wherein the thickening agent coacts with the B-staging agent to cause B-staging of the vinyl ester resin at room temperature.

Applicant has found quite unexpectedly that organic compounds containing one or two ester or carbonyl groups such as found in most readily available esters, ketones and aldehydes synergistically coact with Group II metal oxides or hydroxides to cause B-staging of a conventional unmodified vinyl ester resin at room temperature. If the ester, ketone or aldehyde is used without the Group II metal oxide or hydroxide, it does not cause B-staging of the resin. On the other hand, if the Group II metal oxide or hydroxide is used alone, it is known that such a metal oxide or hydroxide is not capable of B-staging an unmodified vinyl ester resin at room temperature.

The vinyl ester resin composition according to the invention is particularly useful for impregnating a fibrous material such as a woven fabric material. The fibrous material impregnated with the vinyl ester resin composition of the invention has a. shelf life of up to 12 months. B-stage is generally reached in about two weeks following mixture of the various components and impregnation of the fibrous material.

The present invention therefore provides, in another aspect thereof, a fibrous material impregnated with a curable vinyl ester resin composition capable of undergoing B-staging at room temperature, wherein the vinyl ester resin composition comprises:
a) an unmodified vinyl ester resin having no free carboxyl groups;
b) a reactive diluent consisting of an ethylenically unsaturated monomer;
c) a free-radical curing agent;
d) a B-staging agent comprising a Group II metal oxide or hydroxide, or a mixture thereof; and
e) a thickening agent comprising an ester, a ketone, an aldehyde or a mixture thereof as defined in claim 1;
the thickening agent coacting with the B-staging agent to cause B-staging of the vinyl ester resin at room temperature.

### MODES FOR CARRYING OUT THE INVENTION

Examples of suitable esters which may be used in accordance with the invention include ethyl acetate, octyl acetate, ethyl butyrate, diisobutyl phthalate and 2,2,4-trimethyl-1,3-pentanediol diisobutyrate. Diisopropyl phthalate is preferred. It is also possible to use, as thickening agent, a ketone such as acetone, 2-butanone and methyl isobutyl ketone, and/or an aldehyde such as acetic aldehyde, propionic aldehyde and 3-methyl butanal. Methyl isobutyl ketone is preferred. A particularly preferred thickening agent comprises a mixture of diisobutyl phthalate and methyl isobutyl ketone, or a mixture of diisobutyl phthalate, methyl isobutyl ketone and 2,2,4-trimethyl pentanediol diisobutyrate. The thickening agent is generally present in the resin composition of the invention in an amount of about 0.5 to about 3 weight %, preferably, about 1 weight %, based on the total weight of the composition.

The B-staging agent is advantageously a Group II metal oxide. Magnesium oxide is preferred. The B-staging agent is generally present in the resin composition of the invention in an amount of about 1 to about 5 weight %, preferably about 2 weight %, based on the total weight of the composition.

The vinyl ester resin is generally used in an amount of about 54 to about 58 weight %, preferably about 58 weight %, based on the total weight of the composition. A particularly preferred vinyl ester resin is an epoxy novolac-based vinyl ester resin.

The vinyl ester resin composition according to the invention further includes a reactive diluent consisting of an ethylenically unsaturated monomer which participates to the cross-linking of the vinyl ester resin during subsequent curing thereof. Examples of suitable reactive diluents which may be used include styrene, vinyl toluene, divinylbenzene as well as the methyl, ethyl, isopropyl and octyl esters of acrylic or methacrylic acid. Styrene is preferred. The reactive diluent is generally present in the resin composition of the invention in an amount of about 35 to about 40 weight %, preferably about 38 weight %, based on the total weight of the composition.

Use is preferably made of an epoxy novolac-based vinyl ester resin diluted in styrene, sold by The Dow Chemical Company under the trade-mark DERAKANE 470-300. Such a diluted resin comprises about 50 to about 70 weight % of the vinyl ester resin and about 30 to about 50 weight % of styrene. It has a viscosity ranging from about 250 to about 550 centipoises.

The vinyl ester resin composition of the invention also includes a free-radical curing agent such as an organic peroxide, to initiate cross-linking of the vinyl ester resin with the ethylenically unsaturated monomer during the subsequent curing of the resin composition. Methyl isobutyl ketone peroxide is preferably used as free-radical curing agent. The curing agent is generally present in the resin composition in an amount of about 0.5 to about 3 weight %, preferably about 1 weight %, based on the total weight of the composition.

A particularly preferred curable vinyl ester resin composition capable of undergoing B-staging at room temperature comprises:
about 58 weight % of an unmodified vinyl ester resin such as an epoxy novolac-based vinyl ester resin;
about 38 weight % of a reactive diluent such as styrene;
about 1 weight % of an organic peroxide such as methyl isobutyl ketone peroxide;
about 2 weight % of magnesium oxide;
about 0.7 weight % of diisobutyl phthalate;
about 0.25 weight % of methyl isobutyl ketone; and
about 0.05 weight % of 2,2,4-trimethyl-1,3-pentanediol diisobutyrate.

The following non-limiting examples illustrate the invention.

### EXAMPLE 1

A vinyl ester resin composition was prepared by blending 96.6 weight % of an epoxy novolac-based vinyl ester resin diluted in styrene, sold under the trade-mark DERAKANE 470-300, 1.7 weight % of a mixture of organic compounds sold by The Norac Company, Inc. under the trade-mark NOROX PULCAT A (containing 45 weight % of methyl isobutyl ketone peroxide, 36 weight % of diisobutyl phthalate, 14 weight % of methyl isobutyl ketone and 5 weight % of 2,2,4-trimethyl-1,3-pentanediol diisobutyrate), and 1.7 weight % of magnesium oxide. NOROX PULCAT A is conventionally used in pultrusion processes.

The above vinyl ester resin composition was then used to impregnate a woven E-glass fabric, using a four roll impregnator. A release separator film was used and wound with the impregnated fabric. Packed in a gas barrier film and stored at room temperature, the resin composition gradually thickened and reached a stable B-stage within two weeks. The resin impregnated fabric remained stable at room temperature for one year. When desired, it can be molded at about 125°C during about 15 minutes, for a complete cure.

### EXAMPLE 2

Example 1 was repeated, with the exception that 94.6 weight % of DERAKANE 470-300, 1.6 weight % of NOROX PULCAT A, 1.9 weight % of magnesium dioxide and 1.9 weight % of a thixotropic filler sold under the trade-mark AEROSIL R202 were blended. B-stage was reached within two weeks. The resin impregnated fabric also remained stable at room temperature for one year.

## Claims

1. A curable vinyl ester resin composition capable of undergoing B-staging at room temperature, comprising:
a) an unmodified vinyl ester resin having no free carboxyl groups;
b) a reactive diluent consisting of an ethylenically unsaturated monomer;
c) a free-radical curing agent;
d) a B-staging agent comprising a Group II metal oxide or:
hydroxide, or a mixture thereof; and
e) a thickening agent and comprising an ester, a ketone, an aldehyde or a mixture thereof,
wherein said thickening agent coacts with said B-staging agent to cause B-staging of said vinyl ester resin at room temperature,
said ester is selected from the group consisting of ethyl acetate, octyl acetate, ethyl butyrate, diisobutyl phthalate and 2,2,4-trimethyl-1,3-pentanediol diisobutyrate,
said ketone is selected from the group consisting of acetone, 2-butanone and methyl isobutyl ketone., and
said aldehyde is selected from the group consisting of acetic aldehyde, propionic aldehyde and 3-methyl butanal.

2. A curable vinyl ester resin composition according to claim 1, wherein said vinyl ester resin is an epoxy novolac-based vinyl ester resin.

3. A curable vinyl ester resin composition according to claim 1 or 2, wherein said vinyl ester resin is present in an amount of about 54 to about 58 weight %, based on the total weight of the composition.

4. A curable vinyl ester resin composition according to claim 3, wherein the amount of said vinyl ester resin is about 58 weight %.

5. A curable vinyl ester resin composition any one of claims 1 to 3, wherein said reactive diluent is styrene.

6. A curable vinyl ester resin composition according to any one of claims 1 to 5, wherein said reactive diluent is present in an amount of about 35 to about 40 weight %, based on the total weight of the composition.

7. A curable vinyl ester resin composition according to claim 6, wherein the amount of said reactive diluent is about 38 weight %.

8. A curable vinyl ester resin composition according to any one of claim 1 to 7, wherein said free-radical curing agent is an organic peroxide.

9. A curable vinyl ester resin composition according to claim 8, wherein said organic peroxide is methyl isobutyl ketone peroxide.

10. A curable vinyl ester resin composition according to any one of claims 1 to 9, wherein said free-radical curing agent is present in an amount of about 0.5 to about 3 weight %, based on the total weight of the composition.

11. A curable vinyl ester resin composition according to claim 10, wherein the amount of said free-radical curing agent is about 1 weight %, based on the total weight of the composition.

12. A curable vinyl ester resin composition according to any one of claims 1 to 11, wherein said B-staging agent is a Group II metal oxide.

13. A curable vinyl ester resin composition according to claim 12, wherein said Group II metal oxide is magnesium oxide.

14. A curable vinyl ester resin composition according to any one of claims 1 to 13, wherein said B-staging agent is present in an amount of about 1 to about 5 weight %, based on the total weight of the composition.

15. A curable vinyl ester resin composition according to claim 14, wherein the amount of said B-staging agent is about 2 weight %.

16. A curable vinyl ester resin composition according to any one of claims 1 to 15, wherein said ester is diisobutyl phthalate.

17. A curable vinyl ester resin composition according to any one of claims 1 to 15, wherein said ketone is methyl isobutyl ketone.

18. A curable vinyl ester resin composition according to any one of claims 1 to 15, wherein said thickening agent comprises a mixture of diisobutyl phthalate and methyl isobutyl ketone.

19. A curable vinyl ester resin composition according to any one of claims 1 to 15, wherein said thickening agent comprises a mixture of diisobutyl phthalate, methyl isobutyl ketone and 2,2,4-trimethyl pentanediol diisobutyrate.

20. A curable vinyl ester resin composition according to any one of claims 1 to 19, wherein said thickening agent is present in an amount of about 0.5 to about 3 weight %, based on the total weight of the composition.

21. A curable vinyl ester resin composition according to claim 20, wherein the amount of said thickening agent is about 1 weight %.

22. A curable vinyl ester resin composition capable of undergoing B-staging at room temperature comprising:
about 58 weight % of an unmodified vinyl ester resin having no free carboxyl groups;
about 38 weight % of a reactive diluent consisting of an ethylenically unsaturated monomer;
about 1 weight % of an organic peroxide;
about 2 weight % of magnesium oxide;
about 0.7 weight % of diisobutyl phthalate;
about 0.25 weight % of methyl isobutyl ketone; and
about 0.05 weight % of 2,2,4-trimethyl-1,3-pentanediol diisobutyrate.

23. A curable vinyl ester resin composition according to claim 22, wherein said vinyl ester resin is an epoxy novolac-based vinyl ester resin.

24. A curable vinyl ester resin composition according to claim 22 or 23, wherein said reactive diluent is styrene.

25. A fibrous material impregnated with a curable vinyl ester resin composition capable of undergoing B-staging at room temperature according to any one of claims 1 to 24.

26. A resin impregnated fibrous material according to claim 25, wherein the fibrous material is a woven fabric material.

## Patentansprüche

1. Härtbare Vinylesterharzzusammensetzung, die bei Raumtemperatur in den B-Zustand übergeführt werden kann, umfassend:
a) ein unmodifiziertes Vinylesterharz ohne freie Carboxylgruppen;
b) ein reaktionsfähiges Verdünnungsmittel, das aus einem ethylenisch ungesättigten Monomer besteht;
c) ein radikalisches Härtungsmittel;
d) ein Mittel zum Überführen in den B-Zustand, das ein Metalloxid oder -hydroxid der Gruppe II oder eine Mischung davon umfaßt; und
e) ein Verdickungsmittel, das einen Ester, ein Keton, ein Aldehyd oder eine Mischung davon umfaßt;
wobei das Verdickungsmittel mit dem Mittel zum Überführen in den B-Zustand zusammenwirkt, damit das Vinylesterharz bei Raumtemperatur in den B-Zustand übergeführt wird,
der Ester aus der aus Ethylacetat, Octylacetat, Ethylbutyrat, Diisobutylphthalat und 2,2,4-Trimethyl-1,3-pentandioldiisobutyrat bestehenden Gruppe ausgewählt ist,
das Keton aus der aus Aceton, 2-Butanon und Methylisobutylketon bestehenden Gruppe ausgewählt ist, und
das Aldehyd aus der aus Acetaldehyd, Propionaldehyd und 3-Methylbutanal bestehenden Gruppe ausgewählt ist.

2. Härtbare Vinylesterharzzusammensetzung nach Anspruch 1, bei der das Vinylesterharz ein Vinylesterharz auf Basis von Epoxidharz-Novolak ist.

3. Härtbare Vinylesterharzzusammensetzung nach Anspruch 1 oder 2, bei der das Vinylesterharz in einer Menge von etwa 54 bis etwa 58 Gew.-% vorliegt, bezogen auf das Gesamtgewicht der Zusammensetzung.

4. Härtbare Vinylesterharzzusammensetzung nach Anspruch 3, bei der die Menge an Vinylesterharz etwa 58 Gew.-% beträgt.

5. Härtbare Vinylesterharzzusammensetzung nach einem der Ansprüche 1 bis 3, bei der das reaktionsfähige Verdünnungsmittel Styrol ist.

6. Härtbare Vinylesterharzzusammensetzung nach einem der Ansprüche 1 bis 5, bei der das reaktionsfähige Verdünnungsmittel in einer Menge von etwa 35 bis etwa 40 Gew.-% vorliegt, bezogen auf das Gesamtgewicht der Zusammensetzung.

7. Härtbare Vinylesterharzzusammensetzung nach Anspruch 6, bei der die Menge an reaktionsfähigem Verdünnungsmittel etwa 38 Gew.-% beträgt.

8. Härtbare Vinylesterharzzusammensetzung nach einem der Ansprüche 1 bis 7, bei der das radikalische Härtungsmittel ein organisches Peroxid ist.

9. Härtbare Vinylesterharzzusammensetzung nach Anspruch 8, bei der das organische Peroxid Methylisobutylketon-Peroxid ist.

10. Härtbare Vinylesterharzzusammensetzung nach einem der Ansprüche 1 bis 9, bei der das radikalische Härtungsmittel in einer Menge von etwa 0,5 bis etwa 3 Gew.-% vorliegt, bezogen auf das Gesamtgewicht der Zusammensetzung.

11. Härtbare Vinylesterharzzusammensetzung nach Anspruch 10, bei der die Menge an radikalischem Härtungsmittel etwa 1 Gew.% beträgt, bezogen auf das Gesamtgewicht der Zusammensetzung.

12. Härtbare Vinylesterharzzusammensetzung nach einem der Ansprüche 1 bis 11, bei der das Mittel zum Überführen in den B-Zustand ein Metalloxid der Gruppe II ist.

13. Härtbare Vinylesterharzzusammensetzung nach Anspruch 12, bei der das Metalloxid der Gruppe II Magnesiumoxid ist.

14. Härtbare Vinylesterharzzusammensetzung nach einem der Ansprüche 1 bis 13, bei der das Mittel zum Überführen in den B-Zustand in einer Menge von etwa 1 bis etwa 5 Gew.-% vorliegt, bezogen auf das Gesamtgewicht der Zusammensetzung.

15. Härtbare Vinylesterharzzusammensetzung nach Anspruch 14, bei der die Menge des Mittels zum Überführen in den B-Zustand etwa 2 Gew.-% beträgt.

16. Härtbare Vinylesterharzzusammensetzung nach einem der Ansprüche 1 bis 15, bei der der Ester Diisobutylphthalat ist.

17. Härtbare Vinylesterharzzusammensetzung nach einem der Ansprüche 1 bis 15, bei der das Keton Methylisobutylketon ist.

18. Härtbare Vinylesterharzzusammensetzung nach einem der Ansprüche 1 bis 15, bei der das Verdickungsmittel eine Mischung von Diisobutylphthalat und Methylisobutylketon umfaßt.

19. Härtbare Vinylesterharzzusammensetzung nach einem der Ansprüche 1 bis 15, bei der das Verdickungsmittel eine Mischung von Diisobutylphthalat, Methylisobutylketon und 2,2,4-Trimethylpentandioldiisobutyrat umfaßt.

20. Härtbare Vinylesterharzzusammensetzung nach einem der Ansprüche 1 bis 19, bei der das Verdickungsmittel in einer Menge von etwa 0,5 bis etwa 3 Gew.-% vorliegt, bezogen auf das Gesamtgewicht der Zusammensetzung.

21. Härtbare Vinylesterharzzusammensetzung nach Anspruch 20, bei der die Menge an Verdickungsmittel etwa 1 Gew.-% beträgt.

22. Härtbare Vinylesterharzzusammensetzung, die bei Raumtemperatur in den B-Zustand übergeführt werden kann, umfassend:
etwa 58 Gew.-% eines unmodifizierten Vinylesterharzes ohne freie Carboxylgruppen;
etwa 38 Gew.-% eines reaktionsfähigen Verdünnungsmittels, das aus einem ethylenisch ungesättigten Monomer besteht;
etwa 1 Gew.-% eines organischen Peroxids;
etwa 2 Gew.-% Magnesiumoxid;
etwa 0,7 Gew.-% Diisobutylphthalat;
etwa 0,25 Gew.-% Methylisobutylketon; und
etwa 0,05 Gew.-% 2,2,4-Trimethyl-1,3-pentandioldiisobutyrat.

23. Härtbare Vinylesterharzzusammensetzung nach Anspruch 22, bei der das Vinylesterharz ein Vinylesterharz auf Basis von Epoxidharz-Novolak ist.

24. Härtbare Vinylesterharzzusammensetzung nach Anspruch 22 oder 23, bei der das reaktionsfähige Verdünnungsmittel Styrol ist.

25. Fasermaterial, das mit einer bei Raumtemperatur in den B-Zustand überführbaren härtbaren Vinylesterharzzusammensetzung nach einem der Ansprüche 1 bis 24 imprägniert ist.

26. Mit Harz imprägniertes Fasermaterial nach Anspruch 25, bei dem das Fasermaterial ein Webstoffmaterial ist.

## Revendications

1. Composition de résine vinylester durcissable, capable de passer au stade B à température ambiante, comprenant :
a) une résine vinylester non-modifiée, ne portant pas de groupes carboxyle libres,
b) un diluant réactif, consistant en un monomère à insaturation éthylénique,
c) un durcisseur agissant par radicaux libres,
d) un agent de passage au stade B, comprenant un oxyde ou un hydroxyde d'un métal du groupe II, ou un mélange de tels composés,
e) et un agent épaississant, comprenant un ester, une cétone, un aldéhyde
ou un mélange de tels composés,
lequel agent épaississant agit conjointement avec ledit agent de passage au stade B pour provoquer le passage au stade B de ladite résine vinylester à température ambiante,
et ledit ester étant choisi dans l'ensemble formé par l'acétate d'éthyle, l'acétate d'octyle, le butyrate d'éthyle, le phtalate de diisobutyle et le diisobutyrate de 2,2,4-triméthyl-1,3-pentanediol, ladite cétone étant choisie dans l'ensemble formé par l'acétone, la 2-butanone et la méthyl-isobutyl-cétone, et ledit aldéhyde étant choisi dans l'ensemble formé par l'acétaldéhyde, le propionaldéhyde et le 3-méthyl-butanal.

2. Composition de résine vinylester durcissable, conforme à la revendication 1, dans laquelle ladite résine vinylester est une résine vinylester à base d'époxy-novolaque.

3. Composition de résine vinylester durcissable, conforme à la revendication 1 ou 2, dans laquelle ladite résine vinylester se trouve en une quantité représentant à peu près de 54 à 58 % du poids total de la composition.

4. Composition de résine vinylester durcissable, conforme à la revendication 3, dans laquelle ladite résine vinylester se trouve en une proportion pondérale d'environ 58 %.

5. Composition de résine vinylester durcissable, conforme à l'une des revendications 1 à 3, dans laquelle ledit diluant réactif est du styrène.

6. Composition de résine vinylester durcissable, conforme à l'une des revendications 1 à 5, dans laquelle ledit diluant réactif se trouve en une quantité représentant à peu près de 35 à 40 % du poids total de la composition.

7. Composition de résine vinylester durcissable, conforme à la revendication 6, dans laquelle ledit diluant réactif se trouve en une proportion pondérale d'environ 38 %.

8. Composition de résine vinylester durcissable, conforme à l'une des revendications 1 à 7, dans laquelle ledit durcisseur agissant par radicaux libres est un peroxyde organique.

9. Composition de résine vinylester durcissable, conforme à la revendication 8, dans laquelle ledit peroxyde organique est du peroxyde de méthyl-isobutyl-cétone.

10. Composition de résine vinylester durcissable, conforme à l'une des revendications 1 à 9, dans laquelle ledit durcisseur agissant par radicaux libres se trouve en une quantité représentant à peu près de 0,5 à 3 % du poids total de la composition.

11. Composition de résine vinylester durcissable, conforme à la revendication 10, dans laquelle ledit durcisseur agissant par radicaux libres se trouve en une quantité représentant à peu près 1 % du poids total de la composition.

12. Composition de résine vinylester durcissable, conforme à l'une des revendications 1 à 11, dans laquelle ledit agent de passage au stade B est un oxyde d'un métal du groupe II.

13. Composition de résine vinylester durcissable, conforme à la revendication 12, dans laquelle ledit oxyde d'un métal du groupe II est l'oxyde de magnésium.

14. Composition de résine vinylester durcissable, conforme à l'une des revendications 1 à 13, dans laquelle ledit agent de passage au stade B se trouve en une quantité représentant à peu près de 1 à 5 % du poids total de la composition.

15. Composition de résine vinylester durcissable, conforme à la revendication 14, dans laquelle ledit agent de passage au stade B se trouve en une proportion pondérale d'environ 2 %.

16. Composition de résine vinylester durcissable, conforme à l'une des revendications 1 à 15, dans laquelle ledit ester est du phtalate de diisobutyle.

17. Composition de résine vinylester durcissable, conforme à l'une des revendications 1 à 15, dans laquelle ladite cétone est de la méthyl-isobutyl-cétone.

18. Composition de résine vinylester durcissable, conforme à l'une des revendications 1 à 15, dans laquelle ledit agent épaississant comprend un mélange de phtalate de diisobutyle et de méthyl-isobutyl-cétone.

19. Composition de résine vinylester durcissable, conforme à l'une des revendications 1 à 15, dans laquelle ledit agent épaississant comprend un mélange de phtalate de diisobutyle, de méthyl-isobutyl-cétone et de diisobutyrate de 2,2,4-triméthyl-pentanediol.

20. Composition de résine vinylester durcissable, conforme à l'une des revendications 1 à 19, dans laquelle ledit agent épaississant se trouve en une quantité représentant à peu près de 0,5 à 3 % du poids total de la composition.

21. Composition de résine vinylester durcissable, conforme à la revendication 20, dans laquelle ledit agent épaississant se trouve en une proportion pondérale d'environ 1 %.

22. Composition de résine vinylester durcissable, capable de passer au stade B à température ambiante, comprenant :
- à peu près 58 % en poids d'une résine vinylester non-modifiée, ne portant pas de groupes carboxyle libres,
- à peu près 38% en poids d'un diluant réactif consistant en un monomère à insaturation éthylénique,
- à peu près 1 % en poids d'un peroxyde organique,
- à peu près 2 % en poids d'oxyde de magnésium,
- à peu près 0,7 % en poids de phtalate de diisobutyle,
- à peu près 0,25 % en poids de méthyl-isobutyl-cétone,
- et à peu près 0,05 % en poids de diisobuyrate de 2,2,4-triméthyl-1,3-pentanediol.

23. Composition de résine vinylester durcissable, conforme à la revendication 22, dans laquelle ladite résine vinylester est une résine vinylester à base d'époxy-novolaque.

24. Composition de résine vinylester durcissable, conforme à la revendication 22 ou 23, dans laquelle ledit diluant réactif est du styrène.

25. Matériau fibreux imprégné d'une composition de résine vinylester durcissable, capable de passer au stade B à température ambiante, conforme à l'une des revendications 1 à 24.

26. Matériau fibreux imprégné de résine, conforme à la revendication 25, lequel matériau est un matériau de type tissu tissé.
